# EUROPÄISCHE PATENTSCHRIFT

(11) **EP 4 578 622 B1**
(45) Veröffentlichungstag und Bekanntmachung des Hinweises auf die Patenterteilung: **29.04.2026**
(21) Anmeldenummer: 24220067.3
(22) Anmeldetag: 16.12.2024
(51) Int. Cl.: B29C 45/14, B44C 5/04, B60R 13/04, F21S 43/50, B29C 45/00, B44F 1/06, B60Q 1/26, B29C 45/16

(54) **VERFAHREN ZUR HERSTELLUNG EINES PARTIELL DURCHLEUCHTBAREN AUSSENVERKLEIDUNGSTEILS FÜR EIN FAHRZEUG**
METHOD FOR PRODUCING A PARTIALLY TRANSLUCENT OUTER TRIM PART FOR A VEHICLE
PROCÉDÉ DE FABRICATION D'UN ÉLÉMENT DE GARNITURE EXTÉRIEURE PARTIELLEMENT TRANSPARENT POUR UN VÉHICULE

(30) Priorität: 28.12.2023 DE 102023136762
(43) Veröffentlichungstag der Anmeldung: 02.07.2025
(73) Patentinhaber: RESRG Automotive SE & Co. KG, 95111 Rehau (DE)
(72) Erfinder: Beyerlein, Patrick, 95111 Rehau (DE); Friese, Dominik, 95111 Rehau (DE); Jäger, Christoph, 95111 Rehau (DE); Kätzel, Patrick, 95111 Rehau (DE); Leister, Christian, 95030 Hof (DE)
(74) Vertreter: Grünecker Patent- und Rechtsanwälte PartG mbB

(56) Entgegenhaltungen:
- EP-A1- 3 632 749
- EP-A1- 3 653 358
- EP-A1- 3 756 888
- WO-A1-2011/029207
- WO-A1-2012/001146
- DE-A1- 102018 128 194
- JP-A- H01 222 944
- US-A1- 2006 121 251

## Beschreibung

Die vorliegende Erfindung betrifft ein Verfahren zur Herstellung eines partiell durchleuchtbaren Außenverkleidungsteils für ein Fahrzeug.

Es sind eine Vielzahl von Herstellungsverfahren für derartige Außenverkleidungsteile bekannt. Hierzu sei nur beispielhaft auf die Dokumente DE 10 2020 000 921 A1, DE 10 2017 214 943 A1, DE 10 2020 105 729 A1, DE 10 2021 134 475 A1, DE 10 2020 134 132 A1 oder EP 3 632 749 A1 verwiesen.

Die EP 3 653 358 A1 offenbart ein Verfahren zur Herstellung eines Kraftfahrzeug-Karosserieteils, das einen Hauptkörper mit einer Dekorfolie aufweist. Die Dekorfolie umfasst einen lichtdurchlässigen Bereich und einen opaken Bereich. Die Folie wird an der Wand der Formkavität angeordnet, wobei der opake Bereich gegenüber dem lichtdurchlässigen Bereich vorsteht und in Kontakt mit der Formwand liegt, während zwischen dem lichtdurchlässigen Bereich und der Formwand ein Abstand besteht. Anschließend wird Kunststoffmaterial eingespritzt, um den Hauptkörper auf die Folie aufzuspritzen. Der Einspritzdruck bewirkt, dass der lichtdurchlässige Bereich gegen die Formwand gedrückt wird. Die Dekorfolie kann dabei aus einer lichtdurchlässigen Folie und einem darauf angeordneten opaken Element bestehen und optional zusätzlich eine Farbschicht aufweisen.

Die EP 3 756 888 A1 beschreibt ein Verfahren zur Herstellung eines Dekorteils für die Kraftfahrzeuginnenausstattung. Eine erste Lage wird unter Druck und Wärme mit einer ersten Kaschierung zu einem im Wesentlichen ebenen Schichtverbund verbunden. Eine zweite Lage wird in einem weiteren Schritt unter Druck und Wärme mit einer zweiten Kaschierung verbunden. Im entstehenden Zwischenerzeugnis werden bevorzugt Durchbrechungen durch Laserschneiden ausgebildet. Das Zwischenerzeugnis wird anschließend in eine Werkzeughälfte eines Spritzgießwerkzeugs eingelegt und positioniert, wobei die sichtseitige Oberfläche der ersten Lage die Kavitätswand kontaktiert und die sichtseitige Oberfläche der zweiten Lage parallel und mit Abstand dazu liegt. Die rückseitige Verstärkungslage wird durch Hinterspritzen eines Kunststoffs an der Rückseite der zweiten Lage ausgebildet und mit der zweiten Kaschierung verbunden. Dabei wird die zweite Kaschierung in die Durchbrechungen gedrückt.

Aus der JP H01-222944 A ist ein Verfahren zur Herstellung eines glänzenden Musters bekannt, beispielsweise für kosmetische Behälter. Hierzu wird ein mehrschichtiger bedruckter Folienverbund verwendet, in dem der Druck Aussparungen aufweist. Beim Hinterspritzen wird Material in diese Aussparungen gedrückt. Ein Bestandteil des Verbundes ist eine Metallfolie, die über eine Klebschicht mit einer Kunststofffolie verbunden ist.

Die EP 3 632 749 A1 beschreibt ein Verfahren zur Herstellung eines durchleuchtbaren Verkleidungsteils für ein Kraftfahrzeug. Ein Grundkörper aus einem transluzenten oder transparenten Polymermaterial wird bereitgestellt und anschließend mit einer farbgebenden Beschichtung versehen, beispielsweise einer Lackfolie. In die farbgebende Beschichtung werden zahlreiche punktförmige Perforationen eingebracht, die die Beschichtung vollständig durchdringen, um eine Durchleuchtung zu ermöglichen. Abschließend wird eine Klarlackschicht aufgebracht, die sowohl die Beschichtung als auch die Perforationen versiegelt und beim Auftrag zusätzlich die Perforationen ausfüllt.

Die DE 10 2018 128194 A1 offenbart das Aufbringen einer Versiegelungsschicht. Die Dokumente WO 2012/001146 A1, WO 2011/029207 A1und US 2006/0121251 A1 betreffen weitere Verfahren zur Herstellung dekorativer Bauteile durch Hinterspritzen. Dabei wird eine Folie oder Dekorlage beim Einspritzen der Kunststoffschmelze in die Durchbrechungen einer weiteren Dekorlage gedrückt.

Aufgabe der vorliegenden Erfindung ist es ein alternatives Verfahren zur Herstellung eines Außenverkleidungsteils anzugeben.

Diese Aufgabe wird vorliegend gelöst durch ein Verfahren zur Herstellung eines partiell durchleuchtbaren Außenverkleidungsteils für ein Fahrzeug, wobei das Außenverkleidungsteil einen Grundkörper aufweist, umfassend die folgenden Schritte:
- Bereitstellen einer Farbfolie, die wenigstens eine Trägerfolie aus einem für sichtbares Licht transparenten oder transluzenten Kunststoffmaterial und eine auf der Trägerfolie angeordnete, lichtundurchlässige und farbgebende Schicht aufweist,
- Bereitstellen einer Designfolie, die wenigstens eine Trägerfolie aus einem für sichtbares Licht transparenten oder transluzenten Kunststoffmaterial, eine transparente oder transluzente Haftvermittlerschicht und eine zwischen der Trägerfolie und der Haftvermittlerschicht angeordnete transparente oder transluzente Dekorschicht aufweist,
- Einbringen einer Vielzahl von Perforationen in die Farbfolie, wobei die Perforationen die Trägerfolie und die Farbschicht vollständig durchdringen, um hierdurch eine partielle Durchleuchtbarkeit der Farbfolie zu ermöglichen,
- Bilden eines Folienstapels aus der Farbfolie und der Designfolie, wobei die Haftvermittlerschicht der Designfolie an der der farbgebenden Schicht abgewandten Seite der Trägerfolie der Farbfolie anliegt,
- Einlegen des Folienstapels in ein Spritzgusswerkzeug, das wenigstens zwei Werkzeugformhälften aufweist, die im geschlossenen Zustand zwischen sich eine den Grundkörper definierende Kavität ausbilden, wobei die farbgebende Schicht der Farbfolie des Folienstapels an der Innenwand einer der Werkzeugformhälften anliegt oder der Innenwand einer der Werkzeugformhälften gegenüberliegt,
- Einspritzen eines den Grundkörper bildenden plastifizierten Kunststoffmaterials in die Kavität, wobei das Kunststoffmaterial aus einem für sichtbares Licht transparenten oder transluzenten Kunststoffmaterial besteht, wobei das plastifizierte Kunststoffmaterial so eingespritzt wird, dass es den Folienstapel hinterspritzt und sich dabei mit dem Folienstapel verbindet, wobei durch den Spritzdruck und/oder den Nachdruck des den Grundkörper bildenden Kunststoffmaterials Teilbereiche der Dekorschicht und der über der Dekorschicht angeordneten Haftvermittlerschicht in die Perforationen der Farbfolie gedrückt werden,
- Aufbringen einer die Farbfolie und die Teilbereiche versiegelnden Versiegelungsschicht aus einem transparenten oder transluzenten Kunststoffmaterial.

Dass das plastifizierte Kunststoffmaterial so eingespritzt wird, dass es den Folienstapel hinterspritzt, bedeutet insbesondere, dass es den Folienstapel zwischen der Innenwand der Werkzeugformhälfte und dem Kunststoffmaterial des Grundkörpers einschließt und sich dabei mit dem Folienstapel verbindet.

Das Einbringen der Perforationen in die Farbfolie kann beispielsweise durch Stanzen, insbesondere durch Feinstanzen, oder durch Wasserstrahlschneiden oder durch Laserstrahlschneiden oder durch Plasmastrahlschneiden oder durch Bohren oder durch Schneiden mit einem Messer erfolgt.

Das Kunststoffmaterial der Trägerfolie der Farbfolie und/oder das Kunststoffmaterial der Trägerfolie der Designfolie kann bevorzugt Polypropylen umfassen oder aus Polypropylen bestehen.

Das Kunststoffmaterial des Grundkörpers kann bevorzugt ebenfalls Polypropylen umfassen oder aus Polypropylen bestehen.

Die Versiegelungsschicht kann bevorzugt Polyurethan umfassen oder aus Polyurethan bestehen.

Der Haftvermittler der Haftvermittlerschicht ist bevorzugt dazu vorgesehen die Haftung zwischen Polypropylen und Polyurethan zu verbessern oder zu ermöglichen.

Die Farbfolie und die Designfolie des Folienstapels können sich bevorzugt durch den Spritzdruck und/oder den Nachdruck des den Grundkörper bildenden Kunststoffmaterials miteinander verbinden, insbesondere stoffschlüssig miteinander verbinden. Selbstredend ist es auch möglich die Farbfolie und die Designfolie vor dem Einlegen des Folienstapels in das Spritzgusswerkzeug miteinander zu verbinden, insbesondere stoffschlüssig zu verbinden.

Wenigstens einer der beiden Folien (Designfolie und/oder Farbfolie) kann in einer Variante des Verfahrens wenigstens einen Heizdraht oder wenigstens einen Antennendraht oder wenigstens eine elektrische Schaltung oder wenigstens eine Leuchtdiode aufweisen. Alternativ oder ergänzend kann als Variante wenigstens eine zusätzliche Funktionsfolie vorgesehen sein, die mit dem Folienstapel und/oder mit dem Grundkörper verbunden ist, wobei die Funktionsfolie wenigstens einen Heizdraht oder wenigstens einen Antennendraht oder wenigstens eine elektrische Schaltung oder wenigstens eine Leuchtdiode aufweist.

Der Grundkörper weist bevorzugt eine Wandstärke im Bereich von 0,8 mm bis 5,5 mm, vorzugsweise im Bereich von 1,3 mm bis 2,8 mm auf.

Das Aufbringen der Versiegelungsschicht kann bevorzugt in einem Spritzgussverfahren (gegebenenfalls in demselben Spritzgusswerkzeug wie der Grundkörper) oder durch ein Flutungsverfahren oder durch ein Tauchverfahren oder durch ein Reaction Injection Moulding-Verfahren (RIM) erfolgen.

Das Außenverkleidungsteil kann beispielsweise eine Stoßfängerverkleidung oder eine Türaußenverkleidung oder eine Heckklappenaußenverkleidung oder eine Kotflügelverkleidung oder ein Frontpanel oder eine Kühlerverkleidung, oder eine Schwellerverkleidung oder ein Spoiler oder ein Bestandteil einer Stoßfängerverkleidung oder einer Türaußenverkleidung oder einer Heckklappenaußenverkleidung oder einer Kotflügelverkleidung oder eines Frontpanel oder einer Kühlerverkleidung oder einer Schwellerverkleidung oder eines Spoilers sein. Ein Frontpanel ist derjenige Teil eines Fahrzeugs an deren Stelle sich bei Verbrennungsfahrzeugen der Kühlergrill befunden hat. Insbesondere bei Elektrofahrzeugen ist dieses Frontpanel nicht mehr als Lufteinlass zu dem Kühler (den es hier nicht mehr gibt) ausgebildet, sondern als Designelement in der Fahrzeugmitte vorgesehen.

Das sichtbare Licht, auch als Licht- oder Farbspektrum bezeichnet, ist der Teil des elektromagnetischen Spektrums, den das menschliche Auge wahrnehmen kann. Es reicht von Rot (etwa 760 nm) bis Violett (etwa 380 nm). Vorliegend bedeutet der Begriff "aus einem für sichtbares Licht transparenten oder transluzenten Kunststoffmaterial", dass wenigstens eine Wellenlänge - aber nicht zwingend alle Wellenlängen - aus dem Licht- oder Farbspektrum das Kunststoffmaterial passieren kann.

Ein Material wird als transparent bezeichnet, wenn es von Licht im sichtbaren Bereich durchdrungen werden kann. Ein Element mit einem Transmissionsgrad von bis etwa 90% gilt noch als transparent. Ein Element wird als transluzent bezeichnet, wenn es von Licht im sichtbaren Bereich durchdrungen wird, dabei aber keine klare Unterscheidung von Objekten mehr zulässt, die sich hinter dem Element befinden. Ein Element mit einem Transmissionsgrad bis etwa 30% gilt noch als transluzent. Der Transmissionsgrad eines Materials bzw. Bauteils ist der Anteil des Lichtstroms, der durch das Material bzw. Bauteil hindurchgeht. Der Transmissionsgrad ist also das Verhältnis der vom Material oder dem Bauteil durchgelassenen Lichtintensität zur einfallenden Lichtintensität und nimmt Werte zwischen 0% und 100% an.

### Ausführungsbeispiele

Im Folgenden wird die Erfindung anhand lediglich Ausführungsbeispiele darstellender Zeichnungen erläutert. Es zeigen schematisch:

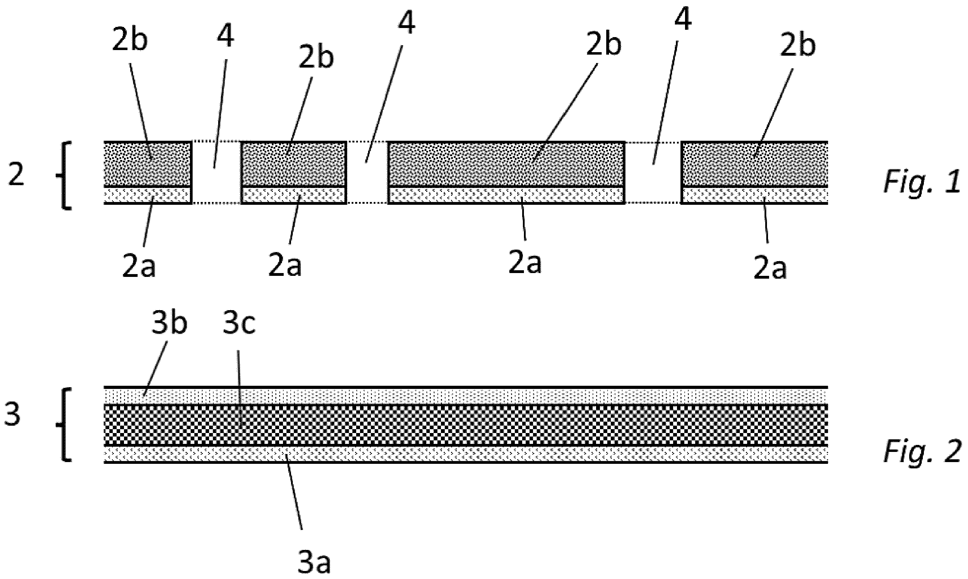

- Fig. 1-5: schematische Darstellungen der einzelnen Verfahrensschritte des erfindungsgemäßen Verfahrens.

In den Figuren werden gleiche oder funktionsgleiche Elemente mit den gleichen Bezugszeichen versehen.

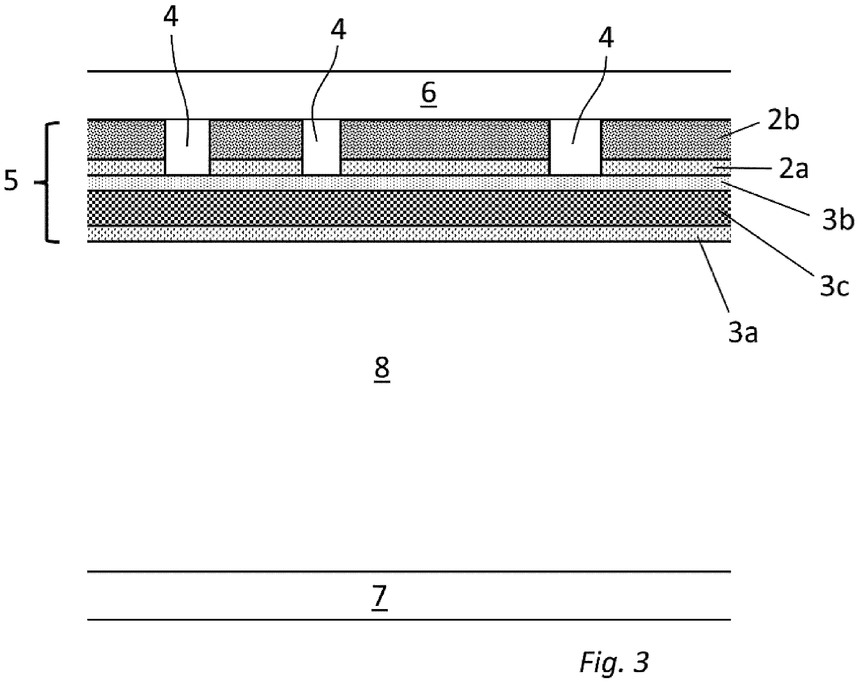

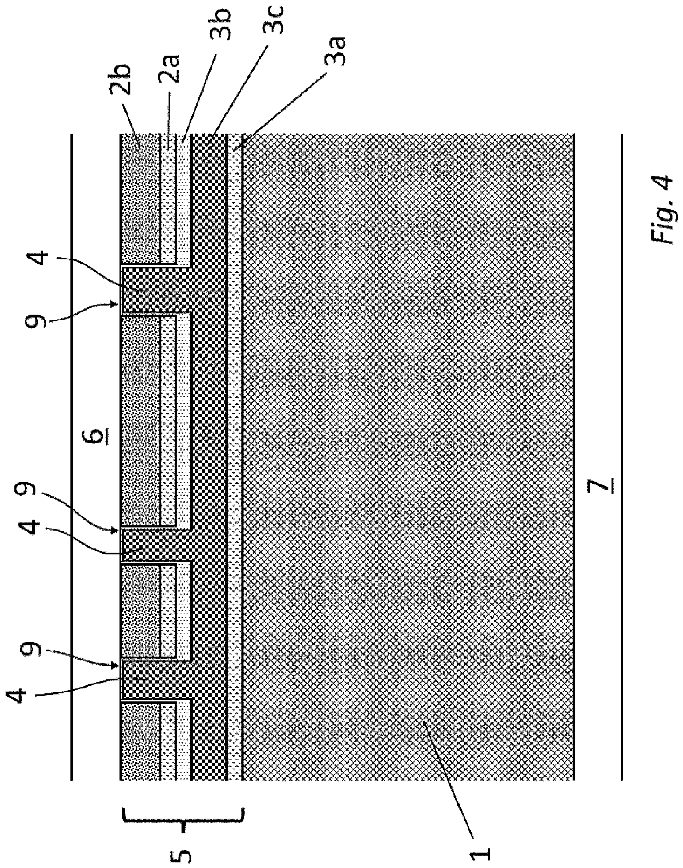

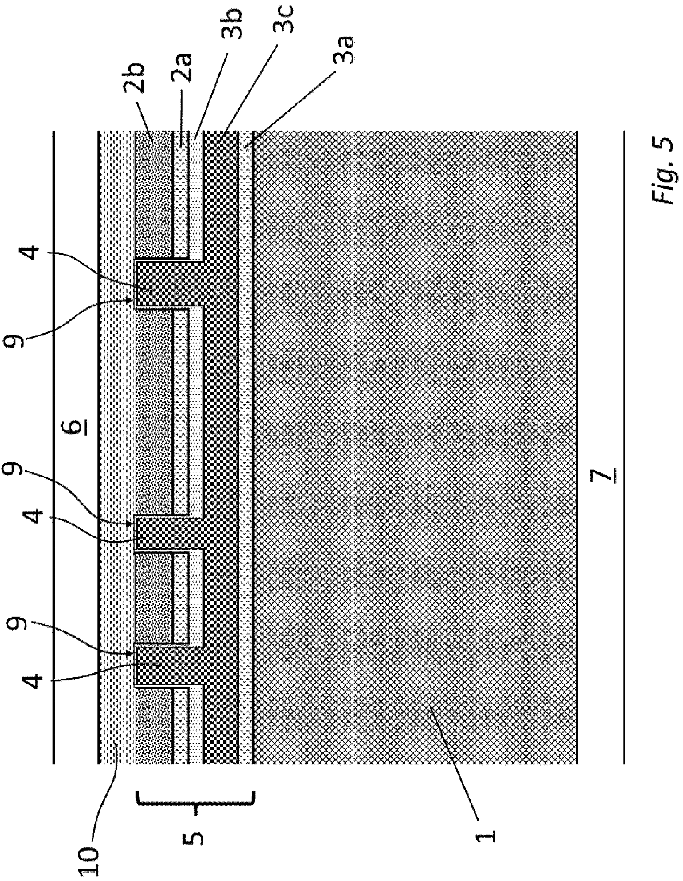

Die nachfolgenden Abbildungen zeigen stark schematisierte Querschnitte durch die verschiedenen Stufen eines Außenverkleidungsteils während dessen Herstellung. Das Verfahren zur Herstellung eines partiell durchleuchtbaren Außenverkleidungsteils für ein Fahrzeug, wobei das Außenverkleidungsteil einen Grundkörper 1 aufweist, umfasst die folgenden Schritte:
- Bereitstellen einer Farbfolie 2, die wenigstens eine Trägerfolie 2a aus einem für sichtbares Licht transparenten oder transluzenten Kunststoffmaterial und eine auf der Trägerfolie 2a angeordnete, lichtundurchlässige und farbgebende Schicht 2b aufweist (dieser Schritt ist nicht explizit dargestellt),
- Bereitstellen einer Designfolie 3, die wenigstens eine Trägerfolie 3a aus einem für sichtbares Licht transparenten oder transluzenten Kunststoffmaterial, eine transparente oder transluzente Haftvermittlerschicht 3b und eine zwischen der Trägerfolie 3a und der Haftvermittlerschicht 3b angeordnete transparente oder transluzente Dekorschicht 3c aufweist (vgl. Fig. 2),
- Einbringen einer Vielzahl von Perforationen 4 in die Farbfolie 2, wobei die Perforationen die Trägerfolie 2a und die Farbschicht 2b vollständig durchdringen, um hierdurch eine partielle Durchleuchtbarkeit der Farbfolie 2 zu ermöglichen (vgl. Ergebnis dieses Verfahrensschritts in Fig. 1),
- Bilden eines Folienstapels 5 aus der Farbfolie 2 und der Designfolie 3, wobei die Haftvermittlerschicht 3b der Designfolie 3 an der der farbgebenden Schicht 2b abgewandten Seite der Trägerfolie 2a der Farbfolie 2 anliegt (vgl. Fig. 3),
- Einlegen des Folienstapels 5 in ein Spritzgusswerkzeug, das wenigstens zwei Werkzeugformhälften 6, 7 aufweist, die im geschlossenen Zustand zwischen sich eine den Grundkörper 1 definierende Kavität 8 ausbilden, wobei die farbgebende Schicht 2b der Farbfolie 2 des Folienstapels 2 an der Innenwand einer der Werkzeugformhälften 6 anliegt oder der Innenwand einer der Werkzeugformhälften 6 gegenüberliegt (vgl. Fig. 3),
- Einspritzen eines den Grundkörper 1 bildenden plastifizierten Kunststoffmaterials in die Kavität 8, wobei das Kunststoffmaterial aus einem für sichtbares Licht transparenten oder transluzenten Kunststoffmaterial besteht, wobei das plastifizierte Kunststoffmaterial so eingespritzt wird, dass es den Folienstapel 5 hinterspritzt und sich dabei mit dem Folienstapel 5 verbindet, wobei durch den Spritzdruck und/oder den Nachdruck des den Grundkörper 1 bildenden Kunststoffmaterials Teilbereiche 9 der Dekorschicht 3c und der über der Dekorschicht 3c angeordneten Haftvermittlerschicht 3b in die Perforationen 4 der Farbfolie 2 gedrückt werden (vgl. Fig. 4),
- Aufbringen einer die Farbfolie 2 und die Teilbereiche 9 versiegelnden Versiegelungsschicht 10 aus einem transparenten oder transluzenten Kunststoffmaterial (vgl. Fig. 5).

Das Einbringen der Perforationen 4 in die Farbfolie 2 kann durch Stanzen, insbesondere durch Feinstanzen, oder durch Wasserstrahlschneiden oder durch Laserstrahlschneiden oder durch Plasmastrahlschneiden oder durch Bohren oder durch Schneiden mit einem Messer erfolgen.

Das Kunststoffmaterial der Trägerfolie 2a der Farbfolie 2 und das Kunststoffmaterial der Trägerfolie 3a der Designfolie 3 umfasst Polypropylen umfasst oder besteht aus Polypropylen.

Das Kunststoffmaterial des Grundkörpers 1 umfasst ebenfalls Polypropylen oder besteht ebenfalls aus Polypropylen.

Die Versiegelungsschicht 10 umfasst Polyurethan oder besteht aus Polyurethan.

Der Haftvermittler der Haftvermittlerschicht 3b ist dazu vorgesehen die Haftung zwischen Polypropylen und Polyurethan zu verbessern oder zu ermöglichen.

Die Farbfolie 2 und die Designfolie 3 des Folienstapels 5 werden durch den Spritzdruck und/oder den Nachdruck des den Grundkörper 1 bildenden Kunststoffmaterials miteinander verbunden, insbesondere stoffschlüssig miteinander verbunden.

Wenigstens eine der beiden Folien 2, 3 kann wenigstens einen Heizdraht oder wenigstens einen Antennendraht oder wenigstens eine elektrische Schaltung oder wenigstens eine Leuchtdiode aufweist oder, es kann wenigstens eine zusätzliche Funktionsfolie vorgesehen sein, die mit dem Folienstapel 5 und/oder mit dem Grundkörper 1 verbunden ist, wobei die Funktionsfolie wenigstens einen Heizdraht oder wenigstens einen Antennendraht oder wenigstens eine elektrische Schaltung oder wenigstens eine Leuchtdiode aufweist (hier nicht näher dargestellt).

Das Aufbringen der Versiegelungsschicht 10 erfolgt vorliegend in einem Spritzgussverfahren in demselben Spritzgusswerkzeug. Alternativ kann das Aufbringen durch ein Flutungsverfahren oder durch ein Tauchverfahren oder durch ein Reaction Injection Moulding-Verfahren (RIM) erfolgen.

Das Außenverkleidungsteil kann eine Stoßfängerverkleidung oder eine Türaußenverkleidung oder eine Heckklappenaußenverkleidung oder eine Kotflügelverkleidung oder ein Frontpanel oder eine Kühlerverkleidung, oder eine Schwellerverkleidung oder ein Spoiler oder ein Bestandteil einer Stoßfängerverkleidung oder einer Türaußenverkleidung oder einer Heckklappenaußenverkleidung oder einer Kotflügelverkleidung oder eines Frontpanel oder einer Kühlerverkleidung oder einer Schwellerverkleidung oder eines Spoilers sein.

## Patentansprüche

1. Verfahren zur Herstellung eines partiell durchleuchtbaren Außenverkleidungsteils für ein Fahrzeug, wobei das Außenverkleidungsteil einen Grundkörper (1) aufweist, umfassend die folgenden Schritte:
- Bereitstellen einer Farbfolie (2), die wenigstens eine Trägerfolie (2a) aus einem für sichtbares Licht transparenten oder transluzenten Kunststoffmaterial und eine auf der Trägerfolie (2a) angeordnete, lichtundurchlässige und farbgebende Schicht (2b) aufweist,
- Bereitstellen einer Designfolie (3), die wenigstens eine Trägerfolie (3a) aus einem für sichtbares Licht transparenten oder transluzenten Kunststoffmaterial, eine transparente oder transluzente Haftvermittlerschicht (3b) und eine zwischen der Trägerfolie (3a) und der Haftvermittlerschicht (3b) angeordnete transparente oder transluzente Dekorschicht (3c) aufweist,
- Einbringen einer Vielzahl von Perforationen (4) in die Farbfolie (2), wobei die Perforationen die Trägerfolie (2a) und die Farbschicht (2b) vollständig durchdringen, um hierdurch eine partielle Durchleuchtbarkeit der Farbfolie (2) zu ermöglichen,
- Bilden eines Folienstapels (5) aus der Farbfolie (2) und der Designfolie (3), wobei die Haftvermittlerschicht (3b) der Designfolie (3) an der der farbgebenden Schicht (2b) abgewandten Seite der Trägerfolie (2a) der Farbfolie (2) anliegt,
- Einlegen des Folienstapels (5) in ein Spritzgusswerkzeug, das wenigstens zwei Werkzeugformhälften (6, 7) aufweist, die im geschlossenen Zustand zwischen sich eine den Grundkörper (1) definierende Kavität (8) ausbilden, wobei die farbgebende Schicht (2b) der Farbfolie (2) des Folienstapels (2) an der Innenwand einer der Werkzeugformhälften (6) anliegt oder der Innenwand einer der Werkzeugformhälften (6) gegenüberliegt,
- Einspritzen eines den Grundkörper (1) bildenden plastifizierten Kunststoffmaterials in die Kavität (8), wobei das Kunststoffmaterial aus einem für sichtbares Licht transparenten oder transluzenten Kunststoffmaterial besteht, wobei das plastifizierte Kunststoffmaterial so eingespritzt wird, dass es den Folienstapel (5) hinterspritzt und sich dabei mit dem Folienstapel (5) verbindet, wobei durch den Spritzdruck und/oder den Nachdruck des den Grundkörper (1) bildenden Kunststoffmaterials Teilbereiche (9) der Dekorschicht (3c) und der über der Dekorschicht (3c) angeordneten Haftvermittlerschicht (3b) in die Perforationen (4) der Farbfolie (2) gedrückt werden,
- Aufbringen einer die Farbfolie (2) und die Teilbereiche (9) versiegelnden Versiegelungsschicht (10) aus einem transparenten oder transluzenten Kunststoffmaterial.

2. Verfahren nach Anspruch 1, **dadurch gekennzeichnet, dass** das Einbringen der Perforationen (4) in die Farbfolie (2) durch Stanzen, insbesondere durch Feinstanzen, oder durch Wasserstrahlschneiden oder durch Laserstrahlschneiden oder durch Plasmastrahlschneiden oder durch Bohren oder durch Schneiden mit einem Messer erfolgt.

3. Verfahren nach Anspruch 1 oder 2, **dadurch gekennzeichnet, dass** das Kunststoffmaterial der Trägerfolie (2a) der Farbfolie (2) und/oder das Kunststoffmaterial der Trägerfolie (3a) der Designfolie (3) Polypropylen umfasst oder aus Polypropylen besteht.

4. Verfahren nach einem der vorstehenden Ansprüche, **dadurch gekennzeichnet, dass** das Kunststoffmaterial des Grundkörpers (1) Polypropylen umfasst oder aus Polypropylen besteht.

5. Verfahren nach einem der vorstehenden Ansprüche, **dadurch gekennzeichnet, dass** die Versiegelungsschicht (10) Polyurethan umfasst oder aus Polyurethan besteht.

6. Verfahren nach Anspruch 3 bis 5, **dadurch gekennzeichnet, dass** der Haftvermittler der Haftvermittlerschicht (3b) dazu vorgesehen ist die Haftung zwischen Polypropylen und Polyurethan zu verbessern oder zu ermöglichen.

7. Verfahren nach einem der vorstehenden Ansprüche, **dadurch gekennzeichnet, dass** die Farbfolie (2) und die Designfolie (3) des Folienstapels (5) sich durch den Spritzdruck und/oder den Nachdruck des den Grundkörper (1) bildenden Kunststoffmaterials miteinander verbinden, insbesondere stoffschlüssig miteinander verbinden.

8. Verfahren nach einem der vorstehenden Ansprüche, **dadurch gekennzeichnet, dass** wenigstens einer der beiden Folien (2, 3) wenigstens einen Heizdraht oder wenigstens einen Antennendraht oder wenigstens eine elektrische Schaltung oder wenigstens eine Leuchtdiode aufweist oder, dass wenigstens eine zusätzliche Funktionsfolie vorgesehen ist, die mit dem Folienstapel (5) und/oder mit dem Grundkörper (1) verbunden ist, wobei die Funktionsfolie wenigstens einen Heizdraht oder wenigstens einen Antennendraht oder wenigstens eine elektrische Schaltung oder wenigstens eine Leuchtdiode aufweist.

9. Verfahren nach einem der vorstehenden Ansprüche, **dadurch gekennzeichnet, dass** das Aufbringen der Versiegelungsschicht (10) in einem Spritzgussverfahren oder durch ein Flutungsverfahren oder durch ein Tauchverfahren oder durch ein Reaction Injection Moulding-Verfahren (RIM) erfolgt.

10. Verfahren nach einem der vorstehenden Ansprüche, **dadurch gekennzeichnet, dass** das Außenverkleidungsteil eine Stoßfängerverkleidung oder eine Türaußenverkleidung oder eine Heckklappenaußenverkleidung oder eine Kotflügelverkleidung oder ein Frontpanel oder eine Kühlerverkleidung oder eine Schwellerverkleidung oder ein Spoiler, oder ein Bestandteil einer Stoßfängerverkleidung oder einer Türaußenverkleidung oder einer Heckklappenaußenverkleidung oder einer Kotflügelverkleidung oder eines Frontpanel oder einer Kühlerverkleidung oder einer Schwellerverkleidung oder eines Spoilers ist.

## Claims

1. Method for producing a partially transilluminable exterior trim part for a vehicle, wherein the exterior trim part has a base body (1), comprising the following steps:
- Providing a color film (2), which has at least one carrier film (2a) made of a plastic material that is transparent or translucent to visible light and an opaque, color-imparting layer (2b) arranged on the carrier film (2a),
- Providing a design film (3), which has at least one carrier film (3a) made of a plastic material that is transparent or translucent to visible light, a transparent or translucent adhesion promoter layer (3b), and a transparent or translucent decorative layer (3c) arranged between the carrier film (3a) and the adhesion promoter layer (3b),
- Introducing a multiplicity of perforations (4) into the color film (2), wherein the perforations completely penetrate the carrier film (2a) and the color layer (2b) in order thereby to enable partial transillumination of the color film (2),
- Forming a film stack (5) from the color film (2) and the design film (3), wherein the adhesion promoter layer (3b) of the design film (3) bears against the side of the carrier film (2a) of the color film (2) facing away from the color-imparting layer (2b),
- Placing the film stack (5) into an injection molding tool which has at least two tool mold halves (6, 7) which, in the closed state, form between them a cavity (8) defining the base body (1), wherein the color-imparting layer (2b) of the color film (2) of the film stack (2) bears against an inner wall of one of the tool mold halves (6) or lies opposite the inner wall of one of the tool mold halves (6),
- Injecting a plasticized plastic material forming the base body (1) into the cavity (8), wherein the plastic material consists of a plastic material that is transparent or translucent to visible light, wherein the plasticized plastic material is injected in such a way that it back-injects the film stack (5) and thereby bonds to the film stack (5), wherein, by the injection pressure and/or the holding pressure of the plastic material forming the base body (1), partial regions (9) of the decorative layer (3c) and of the adhesion promoter layer (3b) arranged above the decorative layer (3c) are pressed into the perforations (4) of the color film (2),
- Applying a sealing layer (10) made of a transparent or translucent plastic material, sealing the color film (2) and the partial regions (9).

2. Method according to claim 1, **characterized in that** introducing the perforations (4) into the color film (2) is carried out by punching, in particular by fine blanking, or by waterjet cutting or by laser beam cutting or by plasma beam cutting or by drilling or by cutting with a knife.

3. Method according to claim 1 or 2, **characterized in that** the plastic material of the carrier film (2a) of the color film (2) and/or the plastic material of the carrier film (3a) of the design film (3) comprises polypropylene or consists of polypropylene.

4. Method according to one of the preceding claims, **characterized in that** the plastic material of the base body (1) comprises polypropylene or consists of polypropylene.

5. Method according to one of the preceding claims, **characterized in that** the sealing layer (10) comprises polyurethane or consists of polyurethane.

6. Method according to claims 3 to 5, **characterized in that** the adhesion promoter of the adhesion promoter layer (3b) is intended to improve or enable the adhesion between polypropylene and polyurethane.

7. Method according to one of the preceding claims, **characterized in that** the color film (2) and the design film (3) of the film stack (5) bond to one another due to the injection pressure and/or the holding pressure of the plastic material forming the base body (1), in particular bond to one another in a material-bonded manner.

8. Method according to one of the preceding claims, **characterized in that** at least one of the two films (2, 3) has at least one heating wire or at least one antenna wire or at least one electrical circuit or at least one light-emitting diode, or that at least one additional functional film is provided which is connected to the film stack (5) and/or to the base body (1), wherein the functional film has at least one heating wire or at least one antenna wire or at least one electrical circuit or at least one light-emitting diode.

9. Method according to one of the preceding claims, **characterized in that** applying the sealing layer (10) is carried out in an injection molding process or by a flow-coating process or by an immersion process or by a Reaction Injection Molding process (RIM).

10. Method according to one of the preceding claims, **characterized in that** the exterior trim part is a bumper cover or an outer door trim or an outer tailgate trim or a fender trim or a front panel or a radiator cover or a rocker panel trim or a spoiler, or a component part of a bumper cover or an outer door trim or an outer tailgate trim or a fender trim or a front panel or a radiator cover or a rocker panel trim or a spoiler.

## Revendications

1. Procédé de fabrication d'une pièce de garniture extérieure partiellement transilluminable pour un véhicule, la pièce de garniture extérieure présentant un corps de base (1), comprenant les étapes suivantes :
- Mise à disposition d'un film coloré (2), qui présente au moins un film support (2a) en un matériau plastique transparent ou translucide à la lumière visible et une couche (2b) opaque et conférant la couleur, disposée sur le film support (2a),
- Mise à disposition d'un film de design (3), qui présente au moins un film support (3a) en un matériau plastique transparent ou translucide à la lumière visible, une couche d'agent d'adhérence (3b) transparente ou translucide, et une couche décorative (3c) transparente ou translucide, disposée entre le film support (3a) et la couche d'agent d'adhérence (3b),
- Introduction d'une pluralité de perforations (4) dans le film coloré (2), les perforations traversant complètement le film support (2a) et la couche colorée (2b) afin de permettre ainsi une transillumination partielle du film coloré (2),
- Formation d'un empilement de films (5) à partir du film coloré (2) et du film de design (3), la couche d'agent d'adhérence (3b) du film de design (3) étant en appui contre la face du film support (2a) du film coloré (2) tournée à l'opposé de la couche (2b) conférant la couleur,
- Mise en place de l'empilement de films (5) dans un moule d'injection comprenant au moins deux demi-coquilles de moule (6, 7) qui, à l'état fermé, forment entre elles une cavité (8) définissant le corps de base (1), la couche (2b) conférant la couleur du film coloré (2) de l'empilement de films (2) étant en appui contre la paroi intérieure de l'une des demi-coquilles de moule (6) ou faisant face à la paroi intérieure de l'une des demi-coquilles de moule (6),
- Injection dans la cavité (8) d'un matériau plastique plastifié formant le corps de base (1), le matériau plastique consistant en un matériau plastique transparent ou translucide à la lumière visible, le matériau plastique plastifié étant injecté de telle sorte qu'il surmoule par l'arrière l'empilement de films (5) et se lie ce faisant à l'empilement de films (5), des zones partielles (9) de la couche décorative (3c) et de la couche d'agent d'adhérence (3b) disposée au-dessus de la couche décorative (3c) étant, par la pression d'injection et/ou la pression de maintien du matériau plastique formant le corps de base (1), poussées dans les perforations (4) du film coloré (2),
- Application d'une couche d'étanchéité (10) en un matériau plastique transparent ou translucide, scellant le film coloré (2) et les zones partielles (9).

2. Procédé selon la revendication 1, **caractérisé en ce que** l'introduction des perforations (4) dans le film coloré (2) est réalisée par poinçonnage, en particulier par découpage fin, ou par découpe au jet d'eau, ou par découpe au faisceau laser, ou par découpe au faisceau plasma, ou par perçage, ou par découpe au couteau.

3. Procédé selon la revendication 1 ou 2, **caractérisé en ce que** le matériau plastique du film support (2a) du film coloré (2) et/ou le matériau plastique du film support (3a) du film de design (3) comprend du polypropylène ou consiste en du polypropylène.

4. Procédé selon l'une des revendications précédentes, **caractérisé en ce que** le matériau plastique du corps de base (1) comprend du polypropylène ou consiste en du polypropylène.

5. Procédé selon l'une des revendications précédentes, **caractérisé en ce que** la couche d'étanchéité (10) comprend du polyuréthane ou consiste en du polyuréthane.

6. Procédé selon les revendications 3 à 5, **caractérisé en ce que** l'agent d'adhérence de la couche d'agent d'adhérence (3b) est destiné à améliorer ou à permettre l'adhérence entre le polypropylène et le polyuréthane.

7. Procédé selon l'une des revendications précédentes, **caractérisé en ce que** le film coloré (2) et le film de design (3) de l'empilement de films (5) se lient l'un à l'autre sous l'effet de la pression d'injection et/ou de la pression de maintien du matériau plastique formant le corps de base (1), en particulier se lient l'un à l'autre de manière solidaire de matière.

8. Procédé selon l'une des revendications précédentes, **caractérisé en ce qu'**au moins l'un des deux films (2, 3) présente au moins un fil chauffant, ou au moins un fil d'antenne, ou au moins un circuit électrique, ou au moins une diode électroluminescente, ou qu'au moins un film fonctionnel supplémentaire est prévu, qui est lié à l'empilement de films (5) et/ou au corps de base (1), le film fonctionnel présentant au moins un fil chauffant, ou au moins un fil d'antenne, ou au moins un circuit électrique, ou au moins une diode électroluminescente.

9. Procédé selon l'une des revendications précédentes, **caractérisé en ce que** l'application de la couche d'étanchéité (10) est réalisée dans un procédé de moulage par injection, ou par un procédé de revêtement par inondation, ou par un procédé de trempage, ou par un procédé de moulage par injection réactionnelle (RIM).

10. Procédé selon l'une des revendications précédentes, **caractérisé en ce que** la pièce de garniture extérieure est un revêtement de pare-chocs, ou une garniture extérieure de porte, ou une garniture extérieure de hayon, ou une garniture d'aile, ou un panneau avant, ou un revêtement de radiateur, ou une garniture de bas de caisse, ou un spoiler, ou une partie constitutive d'un revêtement de pare-chocs, ou d'une garniture extérieure de porte, ou d'une garniture extérieure de hayon, ou d'une garniture d'aile, ou d'un panneau avant, ou d'un revêtement de radiateur, ou d'une garniture de bas de caisse, ou d'un spoiler.
